# FASCICULE DE BREVET EUROPEEN

(11) **EP 1 223 491 B1**
(45) Date de publication et mention de la délivrance du brevet: **11.08.2004**
(21) Numéro de dépôt: 01402905.2
(22) Date de dépôt: 13.11.2001
(51) Int. Cl.: G05D 1/06, G05D 1/00

(54) **Système pour commander automatiquement des dispositifs hypersustentateurs d'un aéronef durant le décollage**
System zur automatischen Steuerung von Hochauftriebsklappen eines Flugzeugs während des Starts
System for automatically controlling the flaps of an aircraft during take-off

(30) Priorité: 06.12.2000 FR 0015801
(43) Date de publication de la demande: 17.07.2002
(73) Titulaire: AIRBUS FRANCE, 31060 Toulouse (FR)
(72) Inventeur: Chatrenet, Dominique, 31700 Cornebarrieu (FR); Mathieu, Gérard, 31820 Pibrac (FR); Alonso, Fernando, 31500 Toulouse (FR); Cart-Lamy, Martine, 06300 Nice (FR)
(74) Mandataire: Hauer, Bernard

(56) Documents cités:
- EP-A- 0 273 410
- FR-A- 2 425 380
- US-A- 3 945 590
- US-A- 4 042 197
- US-A- 5 519 391

## Description

La présente invention concerne un système pour commander automatiquement des dispositifs hypersustentateurs d'un aéronef durant le décollage.

On sait que, notamment dans un souci de rentabilité, les compagnies aériennes cherchent à augmenter le plus possible le taux de remplissage de leurs avions, ce qui a bien entendu pour conséquence d'augmenter la masse de ces avions. Or, sur certains aéroports, les pistes d'atterrissage et de décollage peuvent s'avérer de longueur insuffisante pour permettre à des avions présentant une masse très élevée de décoller.

Aussi, les avionneurs cherchent à réduire la longueur de piste nécessaire au décollage, quel que soit le type et/ou la masse de l'avion considérés.

A cet effet, pour améliorer les performances au décollage, on équipe généralement la voilure des avions, notamment des avions de transport civil, de dispositifs hypersustentateurs (becs au bord d'attaque de l'aile et volets au bord de fuite) déployables et rétractables, qui permettent d'augmenter sensiblement la portance engendrée à incidence donnée, lorsqu'ils sont déployés, et aussi de repousser le phénomène de décrochage. Cette augmentation de la portance a pour conséquence de diminuer les vitesses d'envol et, donc, de réduire la longueur de piste nécessaire au décollage.

Par conséquent, il est avantageux, lors du décollage, de déployer le plus possible ces dispositifs hypersustentateurs pour augmenter la portance et ainsi diminuer la longueur de piste nécessaire au décollage.

Toutefois, le déploiement des dispositifs hypersustentateurs, tout en augmentant la portance, augmente aussi la traînée. En effet, le profil de la voilure est modifié par la présence de ces dispositifs, ce qui dégrade son comportement aérodynamique vis-à-vis de la traînée : son profil s'éloigne du profil de "voilure lisse". Ceci entraîne alors une dégradation de la pente de montée.

Or, cette pente de montée de l'aéronef (lorsque ce dernier a quitté le sol) doit respecter une contrainte réglementaire. En effet, le règlement aéronautique impose une pente de montée minimale, avec un moteur supposé en panne et ce, afin d'assurer à un avion, dont un des moteurs tombe intempestivement en panne, de pouvoir terminer son décollage dans de bonnes conditions de sécurité.

Par conséquent, pour conserver une pente de montée minimale permettant un décollage en toute sécurité, il est avantageux de déployer le moins possible les dispositifs hypersustentateurs pour réduire au maximum la traînée correspondante.

De ce qui précède, il apparaît clairement que le choix de la configuration des dispositifs hypersustentateurs pour la phase de décollage résulte d'un compromis entre la longueur de piste (favorable à une sortie ou déploiement des dispositifs hypersustentateurs) et la pente de montée (favorable à une rétractation desdits dispositifs hypersustentateurs). Ce choix, qui est réalisé par le pilote de l'aéronef, est réalisé en fonction des conditions de décollage (longueur de piste disponible, altitude, température, masse de l'avion, présence d'obstacle, ...). Une fois que le pilote a fait son choix, il configure les dispositifs hypersustentateurs à l'aide d'un levier de commande dans la configuration correspondant à ce choix. La configuration ainsi choisie est conservée durant toute la phase de décollage, puisque, dans l'état actuel de la réglementation aéronautique, il est interdit au pilote de modifier cette configuration durant toute la phase de décollage, afin de lui permettre de se concentrer exclusivement sur le contrôle de sa trajectoire et de ses paramètres de vol.

Par conséquent, dans l'état actuel de la réglementation et de la technique, le choix de la position ou configuration des dispositifs hypersustentateurs résulte d'un compromis entre deux exigences contradictoires, qui est réalisé avant la phase de décollage et qui n'est donc pas optimal.

On connaît des systèmes permettant d'améliorer la position desdits dispositifs hypersustentateurs.

Toutefois, ces systèmes connus ne s'appliquent, en général, qu'en réponse à une perturbation (panne d'un moteur ou rafales de vent notamment) qui modifie les conditions de vol de l'avion. Ainsi, à titre d'illustration, le document FR-2 425 380 décrit un système de commande qui, lorsqu'un moteur tombe en panne, agit automatiquement sur les gouvernes pour configurer aérodynamiquement l'avion, de manière à compenser l'effet de la perte de poussée sur les caractéristiques aérodynamiques de l'aile. En outre, le document EP-O 337 581 divulgue un système qui, en cas de rafales de vent lors de la phase d'approche, compense la perte d'altitude et le tangage engendrés par les rafales, en augmentant la vitesse de l'avion par augmentation de la poussée des réacteurs, en tenant notamment compte de la position des volets.

Par ailleurs, le document US-4 042 197 décrit un dispositif qui a pour but d'optimiser, en phase de décollage et d'approche, la position des volets hypersustentateurs, ainsi que la poussée de manière à réduire sensiblement le bruit engendré par ces équipements. En ce qui concerne la phase de décollage, des informations de vitesse et de rentrée du train d'atterrissage (train d'atterrissage complètement rentré) sont utilisées pour régler la position des volets hypersustentateurs. Ses informations sont comparées à des informations de référence (vitesse, distance depuis le lâcher des freins, position finale des volets) entrées par le pilote dans un panneau de contrôle. Simultanément, ce dispositif connu indique au pilote le moment où une distance réglementaire depuis le lâcher des freins est atteinte, lui spécifiant alors de réduire la poussée des réacteurs (et donc le bruit en résultant).

Ce dispositif connu nécessite donc une action manuelle du pilote qui doit entrer dans le panneau de contrôle différentes valeurs (vitesse, distance, altitude) avec les risques d'erreur que cela peut comporter.

De plus, surtout, le changement de position des volets hypersustentateurs n'est commandé et effectué que lorsque le train d'atterrissage est complètement rentré, c'est-à-dire vers la fin de la phase de décollage.

La présente invention a pour objet de remédier à ces inconvénients. Elle concerne un système de commande de dispositifs hypersustentateurs d'un aéronef, permettant d'optimiser automatiquement la position de ces derniers lors de la phase de décollage de l'aéronef.

A cet effet, ledit système du type comportant :
- des moyens d'actionnement commandables pour déplacer lesdits dispositifs hypersustentateurs ; et
- une unité de commande susceptible d'engendrer des ordres de commande, pour commander lesdits moyens d'actionnement de sorte que ces derniers amènent lesdits dispositifs hypersustentateurs dans une position déterminée,
est remarquable en ce qu'il comporte, de plus, un premier moyen pour détecter le décollage effectif de l'aéronef et pour signaler le cas échéant une telle détection à l'unité de commande, en ce que, au début de la phase de décollage, lesdits dispositifs hypersustentateurs sont amenés dans une première position, dans laquelle ils sont déployés, et en ce que ladite unité de commande est formée de manière à engendrer, au moins lorsque ledit premier moyen signale le décollage effectif, un ordre de commande permettant d'amener lesdits dispositifs hypersustentateurs dans une deuxième position, dans laquelle ils sont rétractés par rapport à ladite première position.

Ainsi, grâce à l'invention, lors de la phase de décollage :
- tant que l'aéronef roule sur le sol, les dispositifs hypersustentateurs (des becs et/ou des volets) sont déployés de manière à augmenter la portance de l'aéronef, ce qui a pour conséquence de diminuer les vitesses d'envol et donc de réduire la longueur de piste nécessaire au décollage. Par conséquent, pour un type d'aéronef donné, notamment un avion de transport civil, qui est équipé du système de commande conforme à l'invention, on peut soit augmenter sa masse, soit utiliser une piste de décollage plus courte, par rapport à un aéronef du même type non muni dudit système de commande ; et
- lorsque le décollage effectif est réalisé, c'est-à-dire lorsque les roues de l'aéronef quittent le sol, les dispositifs hypersustentateurs sont amenés dans une position moins déployée (c'est-à-dire moins hypersustentée) de manière à réduire la traînée, ce qui permet d'obtenir alors une pente minimale de montée (avec un moteur en panne) permettant un décollage en toute sécurité.

En outre, la commande des dispositifs hypersustentateurs est réalisée de façon automatique, sans aucune intervention du pilote de l'aéronef, ce qui permet à ce dernier de se concentrer exclusivement sur le pilotage, comme l'exige la réglementation aéronautique précitée.

On notera de plus que, contrairement au dispositif de commande divulgué par le document US-4 042 197 précité, le changement de position (ou de configuration) conforme à l'invention des dispositifs hypersustentateurs n'est pas commandé vers la fin de la phase de décollage, mais dès que l'aéronef quitte le sol de manière à diminuer immédiatement la traînée pour optimiser la pente de montée minimale et ainsi réaliser un décollage en toute sécurité. La sécurité n'est pas assurée si le changement de position est réalisé vers la fin de la phase de décollage, comme le prévoit ce dispositif de commande connu. De plus, dans le cadre de la présente invention, la condition de "décollage effectif" est la seule condition essentielle (condition nécessaire et suffisante) pour commander le changement de position, tandis que le document connu précité exige toujours la prise en compte de la vitesse de l'aéronef.

Selon l'invention, ledit système de commande peut être activé et désactivé par un opérateur de l'aéronef, par exemple un pilote.

En outre, avantageusement, ledit premier moyen détecte une indication de train d'atterrissage déjaugé, pour déterminer le moment où l'aéronef décolle effectivement.

Par ailleurs, de façon avantageuse, pour des raisons de sécurité (limites de décrochage), le système de commande conforme à l'invention comporte, de plus, un premier dispositif de sécurité qui comprend :
- des moyens pour déterminer la vitesse effective de l'aéronef ;
- des moyens pour sélectionner une première vitesse minimale de consigne de l'aéronef, pour ladite deuxième position des dispositifs hypersustentateurs ; et
- des moyens pour comparer ladite vitesse effective à ladite première vitesse minimale de consigne,
et ledit premier dispositif de sécurité est associé à ladite unité de commande de sorte que cette dernière engendre un ordre de commande permettant d'amener les dispositifs hypersustentateurs dans ladite deuxième position, uniquement lorsque ladite vitesse effective est supérieure à ladite première vitesse minimale de consigne.

Selon l'invention, ladite deuxième position (rétractée) des dispositifs hypersustentateurs peut être, notamment en fonction des configurations (ou positions) disponibles pour les dispositifs hypersustentateurs :
- dans un premier mode de réalisation, la position des dispositifs hypersustentateurs pour un vol de croisière de l'aéronef ; et
- dans un second mode de réalisation, une position intermédiaire entre ladite première position et une troisième position, dans laquelle les dispositifs hypersustentateurs sont davantage rétractés que dans ladite deuxième position.

Dans ce second mode de réalisation, le système de commande conforme à l'invention comporte de plus, de façon avantageuse, un deuxième moyen pour détecter le début de la rentrée d'au moins un train d'atterrissage de l'aéronef et pour signaler le cas échéant une telle détection à l'unité de commande, et ladite unité de commande est formée de manière à engendrer un ordre de commande permettant d'amener lesdits dispositifs hypersustentateurs de ladite deuxième position à ladite troisième position, au moins lorsque ledit deuxième moyen signale le début de la rentrée du train d'atterrissage.

De plus, dans ce second mode de réalisation, pour des raisons de sécurité ou simplement dans un but de commande, ledit système de commande comporte de plus, avantageusement, un second dispositif de sécurité qui comprend :
- des moyens pour déterminer la vitesse effective de l'aéronef ;
- des moyens pour sélectionner une seconde vitesse minimale de consigne de l'aéronef, pour ladite troisième position des dispositifs hypersustentateurs ; et
- des moyens pour comparer ladite vitesse effective à ladite seconde vitesse minimale de consigne,
et ledit second dispositif de sécurité est associé à ladite unité de commande de sorte que cette dernière engendre un ordre de commande permettant d'amener les dispositifs hypersustentateurs dans ladite troisième position, uniquement lorsque ladite vitesse effective est supérieure à ladite seconde vitesse minimale de consigne.

En outre, avantageusement, ledit système de commande comporte, de plus, un troisième moyen pour déterminer si un débit hydraulique suffisant pour amener les dispositifs hypersustentateurs de la deuxième position à la troisième position est disponible, et ladite unité de commande engendre un ordre de commande pour amener lesdits dispositifs hypersustentateurs de ladite deuxième position à ladite troisième position, uniquement lorsqu'un débit hydraulique suffisant est disponible.

Par ailleurs, de façon avantageuse, le système de commande conforme à l'invention peut comporter, de plus, un moyen pour vérifier si la deuxième position est la position la plus rétractée (ou non), c'est-à-dire pour vérifier si on peut amener les dispositifs hypersustentateurs dans une troisième position.

Les figures du dessin annexé feront bien comprendre comment l'invention peut être réalisée. Sur ces figures, des références identiques désignent des éléments semblables.

La figure 1 montre un avion de transport civil, auquel est appliqué un système de commande conforme à l'invention.

Les figures 2 et 3 illustrent schématiquement des systèmes de commande conformes à l'invention, réalisés respectivement selon deux modes de réalisation différents.

La figure 4 est un schéma illustrant la position conforme à l'invention des dispositifs hypersustentateurs, en fonction des différentes étapes successives d'une phase de décollage.

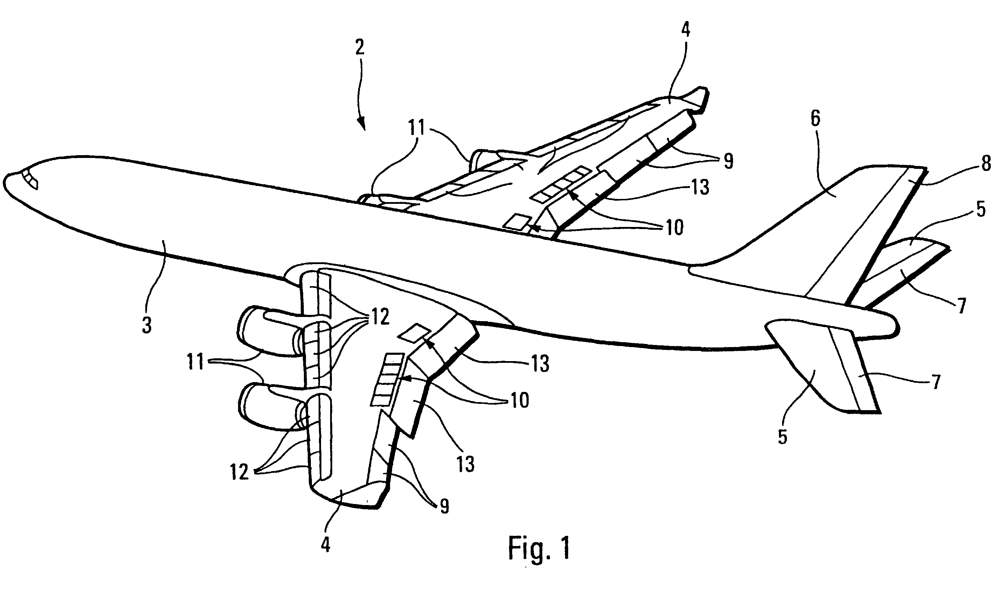

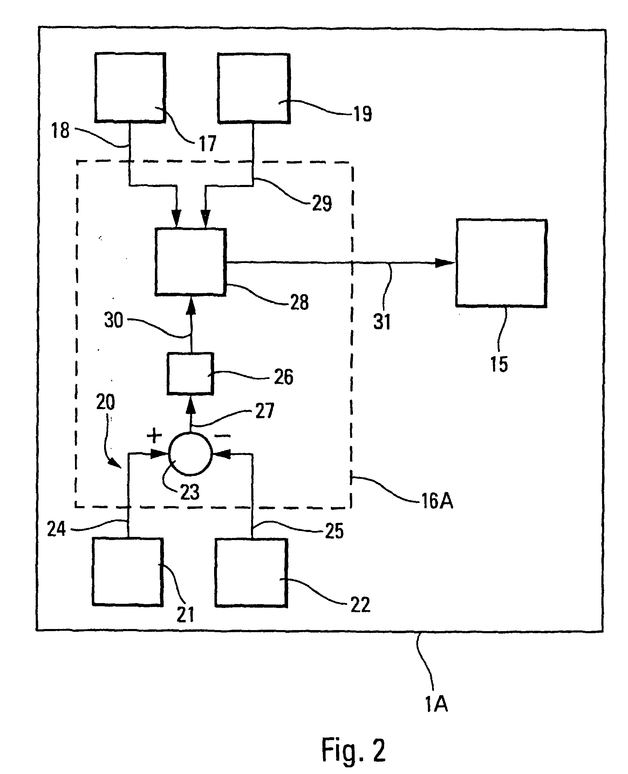

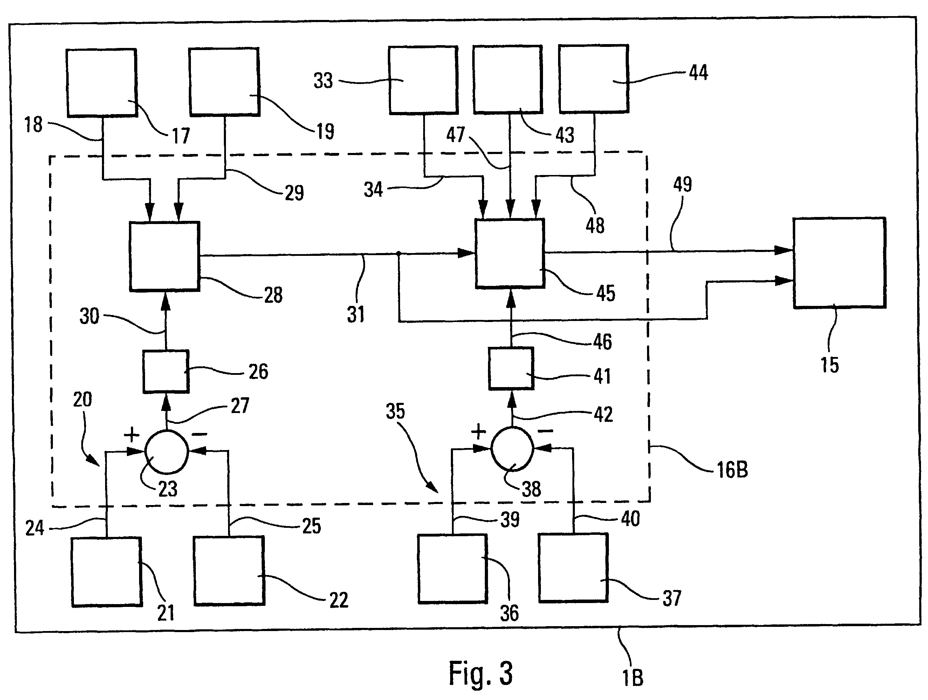

Le système de commande conforme à l'invention et représenté schématiquement selon deux modes de réalisation différents 1A et 1B, respectivement sur les figures 2 et 3, est appliqué à un aéronef 2, en particulier un avion de transport civil, tel que représenté sur la figure 1.

Cet avion de transport 2 comporte un fuselage 3, auquel sont raccordés, entre autres, deux ailes 4 formant la voilure principale, un empennage arrière horizontal formé de deux plans stabilisateurs 5 et une dérive 6. Chacun desdits plans stabilisateurs 5 est pourvu d'une gouverne de profondeur 7, et la dérive 6 est pourvue d'une gouverne de direction 8. De plus, chacune des ailes 4 porte notamment, de façon usuelle, des ailerons 9, des spoilers 10 et deux moteurs de propulsion 11.

Pour améliorer les performances de l'avion 2 au décollage, chacune desdites ailes 4 est, de plus, pourvue de dispositifs hypersustentateurs usuels, à savoir des becs 12 au bord d'attaque de l'aile 4 et des volets 13 au bord de fuite, susceptibles d'être amenés dans différentes positions ou configurations précisées ci-dessous, dispositifs hypersustentateurs qui permettent d'augmenter la portance dudit avion 2.

A titre d'exemple, chaque aile d'un avion du type AIRBUS A340 est équipée de sept becs 12 et deux volets 13.

Le système de commande 1A, 1B conforme à l'invention est destiné à commander automatiquement lesdits dispositifs hypersustentateurs 12 et 13 lors de la phase de décollage de l'avion 2.

A cet effet, ce système de commande 1A, 1B comporte :
- des moyens d'actionnement 15 usuels et commandables, pour déplacer les dispositifs hypersustentateurs 12 et 13 afin de les amener dans l'une des différentes positions ou configurations possibles ; et
- une unité de commande 16A, 16B, susceptible d'engendrer automatiquement des ordres de commande, pour commander lesdits moyens d'actionnement 15.

Selon l'invention :
- ledit système de commande 1A, 1B comporte de plus un moyen 17 précisé ci-dessous, qui est relié par une liaison 18 à l'unité de commande 16A, 16B, et qui est destiné à détecter le "décollage effectif" de l'avion 2 ; et
- ladite unité de commande 16A, 16B est formée de manière à engendrer, au moins lorsque ledit moyen 17 lui signale le décollage effectif de l'avion 2, un ordre de commande permettant d'amener lesdits dispositifs hypersustentateurs 12 et 13, d'une première position déployée au début de la phase de décollage, dans une deuxième position, dans laquelle ils sont rétractés par rapport à cette première position.

Dans le cadre de la présente invention, on entend par "décollage effectif" de l'avion 2, le moment où les dernières roues du train d'atterrissage dudit avion 2 quittent effectivement le sol de la piste de décollage. Pour pouvoir déterminer précisément ce moment, le moyen 17 est de préférence formé de manière à déterminer le moment où le train d'atterrissage est déjaugé. Toutefois, il est bien entendu également envisageable que ce moyen 17 surveille un ou plusieurs autres paramètres pour détecter le décollage effectif.

Ainsi, grâce à l'invention, lors de la phase de décollage :
- tant que l'avion 2 roule sur le sol S, les dispositifs hypersustentateurs 12 et 13 sont déployés de manière à augmenter la portance, ce qui, comme on le sait, a pour conséquence de diminuer la vitesse d'envol et donc de réduire la longueur de piste nécessaire au décollage. Ceci signifie que, pour un type d'avion 2 donné, notamment un avion de transport civil, qui est équipé du système de commande 1A,1B conforme à l'invention, on peut soit augmenter sa masse, soit utiliser une piste de décollage plus courte, par rapport au même type d'avion non muni d'un tel système de commande ; et
- lorsque le décollage effectif a lieu, c'est-à-dire lorsque les roues de l'avion 2 quittent le sol, les dispositifs hypersustentateurs 12 et 13 sont amenés dans une position moins déployée (c'est-à-dire moins hypersustentée) de manière à réduire la traînée, ce qui permet, comme on le sait, d'obtenir alors une pente minimale de montée (avec un moteur en panne) permettant un décollage en toute sécurité.

Comme on peut le voir sur la figure 2, le système de commande 1A comporte de plus :
- un moyen 19 usuel, qui permet au pilote ou à un autre opérateur de l'avion 2 d'activer ou de désactiver manuellement ledit système de commande 1A, notamment avant le décollage ; et
- un dispositif de sécurité 20 qui comprend :
   . des moyens usuels 21 pour déterminer la vitesse effective de l'avion 2;
   . des moyens usuels 22 pour sélectionner une première vitesse minimale de consigne de l'avion 2 pour ladite deuxième position des dispositifs hypersustentateurs 12 et 13 ; et
   . des moyens pour comparer ladite vitesse effective à ladite première vitesse minimale de consigne, ces derniers moyens comprenant par exemple :
      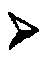 un moyen de calcul 23 relié par des liaisons 24 et 25 respectivement auxdits moyens 21 et 22, pour calculer la différence entre ladite vitesse effective et ladite première vitesse minimale de consigne ; et
      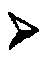 un moyen de comparaison 26 relié par une liaison 27 au moyen de calcul 23, pour comparer cette différence à la valeur nulle.

L'unité de commande 16A comporte une porte logique ET usuelle (porte 28) qui est reliée, par l'intermédiaire de liaisons 18, 29 et 30, respectivement auxdits moyens 17, 19 et 26.

Ainsi, l'unité de commande 16A adresse un ordre de commande aux moyens d'actionnement 15, comme illustré par une liaison 31, lorsque les informations issues desdits moyens 17, 19 et 26 sont toutes favorables à l'émission d'un tel ordre de commande, c'est-à-dire :
a) lorsque le décollage effectif est réalisé (moyen 17) ; et de plus
b) lorsque le système 1 A est activé (moyen 19) ; et
c) que l'avion 2 vole à une vitesse (effective) qui est supérieure à ladite première vitesse minimale de consigne (moyen 26).

Bien entendu, la condition a) précitée est essentielle à la mise en oeuvre de la présente invention, tandis que les conditions b) et c) représentent des perfectionnements dudit système de commande 1A. En particulier, la condition c) représente une mesure de sécurité (limites de décrochage).

Bien que, pour la mise en oeuvre de la présente invention, il suffise que la deuxième position des dispositifs hypersustentateurs 12 et 13 est telle que lesdits dispositifs hypersustentateurs 12 et 13 soient simplement plus rétractés (ou moins déployés) que dans la première position, de préférence :
- ladite première position est la position la plus déployée possible, pour obtenir la portance la plus élevée ; et
- ladite deuxième position est la position habituelle desdits dispositifs hypersustentateurs 12 et 13 dans la phase de vol qui suit la phase de décollage. Une telle mise en oeuvre peut être réalisée par le mode de réalisation 1A de la figure 2.

Toutefois, ladite deuxième position peut aussi être une position intermédiaire entre ladite première position et une troisième position, dans laquelle les dispositifs hypersustentateurs 12 et 13 sont encore davantage rétractés que dans ladite deuxième position, ladite troisième position pouvant correspondre dans ce cas à ladite position habituelle précitée de la phase de vol suivant la phase de décollage.

Le mode de réalisation 1 B du système de commande représenté sur la figure 3 permet de réaliser une telle mise en oeuvre (avec une troisième position).

A cet effet, comme on peut le voir sur la figure 3, ledit mode de réalisation 1B comporte, en plus des éléments précités du mode de réalisation 1 A susceptible de commander par l'intermédiaire de la liaison 31 les moyens 15 pour la commutation de la première position à la deuxième position, notamment un moyen 33, de type usuel, pour détecter le début de la rentrée d'au moins un train d'atterrissage 50, 51 de l'avion 2 et pour signaler le cas échéant une telle détection à l'unité de commande 16B par l'intermédiaire d'une liaison 34, et ladite unité de commande 16B est formée de manière à engendrer un ordre de commande permettant d'amener lesdits dispositifs hypersustentateurs 12 et 13 de ladite deuxième position à ladite troisième position, au moins lorsque ledit moyen 33 signale le début de la rentrée du train d'atterrissage 50, 51.

Ledit système de commande 1B comporte, de plus, un dispositif de sécurité 35 qui comprend :
- des moyens usuels 36 pour déterminer la vitesse effective de l'avion 2. Lesdits moyens 36 peuvent correspondre aux moyens 21 précités ;
- des moyens usuels 37 pour sélectionner une seconde vitesse minimale de consigne de l'avion 2 pour ladite troisième position des dispositifs hypersustentateurs 12 et 13 ; et
- des moyens pour comparer ladite vitesse effective à ladite seconde vitesse minimale de consigne, lesdits derniers moyens comprenant par exemple :
   . un moyen de calcul 38 relié par des liaisons 39 et 40 respectivement auxdits moyens 36 et 37, pour calculer la différence entre ladite vitesse effective et ladite seconde vitesse minimale de consigne ; et
   . un moyen de comparaison 41 relié par une liaison 42 au moyen de calcul 38, pour comparer cette différence à la valeur nulle.

Comme on le verra ci-dessous, ledit dispositif de sécurité 35 est associé à ladite unité de commande 16B de sorte que cette dernière engendre un ordre de commande permettant d'amener les dispositifs hypersustentateurs 12 et 13 de ladite deuxième à ladite troisième position, uniquement lorsque la vitesse effective de l'avion 2 est supérieure à ladite seconde vitesse minimale de consigne.

Ledit système de commande 1B comporte, de plus, un moyen 43 pour déterminer si un débit hydraulique suffisant pour rétracter les dispositifs hypersustentateurs 12 et 13 de la deuxième position à la troisième position est disponible. Bien entendu, si cela n'est pas le cas, le changement de position ne peut pas être commandé et réalisé.

Bien entendu, ce moyen 43 est uniquement nécessaire lorsqu'un débit hydraulique suffisant n'est pas disponible en permanence, en particulier lorsque cette énergie hydraulique est également utilisée pour rentrer les trains d'atterrissage. Dans ce dernier cas, ledit moyen 43 peut être formé de manière à détecter la fin de la consommation d'énergie hydraulique par les trains d'atterrissage.

Le système de commande 1B comporte, de plus, un moyen 44 qui est destiné à vérifier s'il est possible d'amener les dispositifs hypersustentateurs 12 et 13 dans une troisième position, c'est-à-dire un moyen qui vérifie si la deuxième position n'est pas la position la plus rétractée.

L'unité de commande 16B comporte une porte logique ET usuelle (porte 45) qui est reliée, par l'intermédiaire de liaisons 34, 46, 47 et 48, respectivement auxdits moyens 33, 41, 43 et 44, ainsi qu'à la porte 28 par la liaison 31.

Ainsi, l'unité de commande 16B adresse un ordre de commande aux moyens d'actionnement 15, comme illustré par une liaison 49, pour amener les dispositifs hypersustentateurs 12 et 13 de la deuxième position à la troisième position, lorsque les informations issues desdits moyens 28, 33, 41, 43 et 44 sont toutes favorables à l'émission d'un tel ordre de commande, c'est-à-dire lorsque :
a) les dispositifs hypersustentateurs 12 et 13 se trouvent dans la deuxième position (porte 28) ;
b) les trains d'atterrissage commencent à rentrer (moyen 33) ;
c) l'avion 2 vole à une vitesse qui est supérieure à ladite seconde vitesse minimale de consigne (moyen 41) ;
d) un débit hydraulique suffisant pour réaliser le changement de position est disponible (moyen 43) ; et
e) il est possible d'amener les dispositifs hypersustentateurs 12 et 13 dans une troisième position (moyen 44).

Par ailleurs, lorsque les trains d'atterrissage et les dispositifs hypersustentateurs disposent chacun d'une source d'énergie distincte et séparée, dans un mode de réalisation particulier de l'invention, le système de commande peut être tel que le passage de la deuxième à la troisième position se fait dès que la condition de vitesse (relative au dispositif de sécurité 35) est vérifiée, les moyens 33 et 43 n'intervenant pas.

On notera que les informations concernant les première, deuxième et troisième positions des dispositifs hypersustentateurs peuvent être entrées dans un calculateur manuellement par le pilote, comme c'est déjà le cas pour des informations concernant des vitesses de décision. Elles peuvent aussi être mémorisées, l'avion se trouvant souvent dans les mêmes cas de décollage : l'action du pilote se résume alors à l'activation du système.

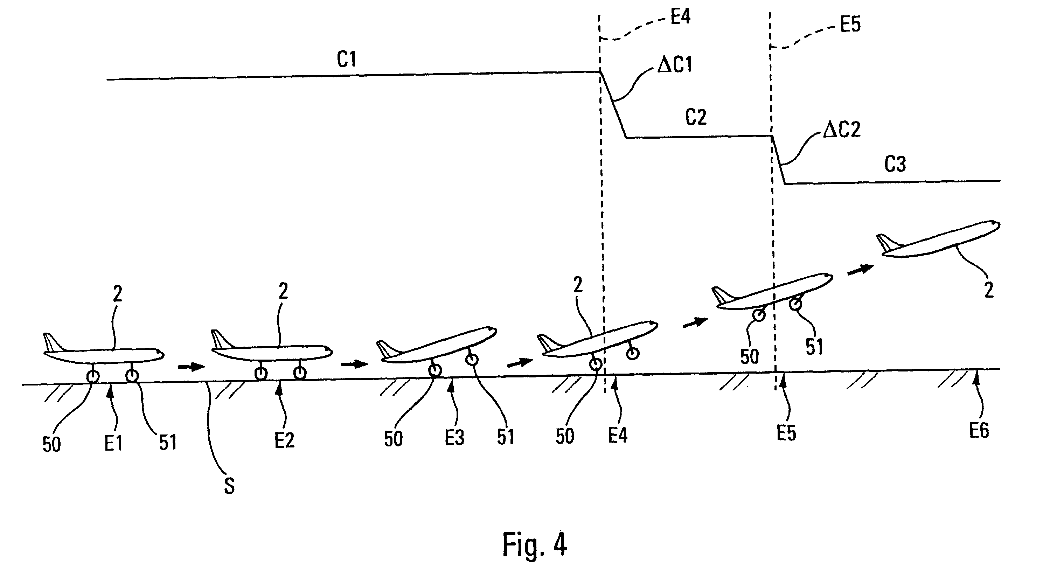

Sur la figure 4, on a représenté les positions ou configurations C1 à C3 des becs 12 et des volets 13, en fonction des différentes étapes E2 à E5 de la phase de décollage entre l'arrêt E1 et la phase de vol E6 postérieure à la phase de décollage, obtenues grâce au système de commande 1 B représenté sur la figure 3.

Plus précisément, ces étapes E1 à E6 comprennent :
- l'arrêt E1, pour lequel la vitesse de l'avion 2 est nulle et pendant lequel le pilote active le système de commande 1B et sélectionne la première position (configuration C1) dans laquelle les dispositifs hypersustentateurs 12 et 13 sont déployés ;
- une étape E2 de roulage sur le sol S, la vitesse de l'avion 2 augmentant progressivement ;
- une étape E3, pour laquelle la vitesse est suffisante pour la mise en rotation de l'avion 2 ;
- le décollage effectif E4 de l'avion 2. Les trains d'atterrissage 50 et 51 sont complètement détendus (indication de train déjaugé), le train d'atterrissage 50 principal quittant le sol S. A cet instant, le système de commande 1B (porte logique 28) adresse un ordre de commande aux moyens 15 pour qu'ils amènent les dispositifs hypersustentateurs 12 et 13 dans la deuxième position (configuration C2). Ce changement de position dure un certain temps ΔC1 ;
- une étape E5 correspondant au début de la rentrée des trains d'atterrissage 50 et 51. A cet instant, le système de commande 1B (porte logique 45) adresse un ordre de commande aux moyens 15 pour qu'ils amènent les dispositifs hypersustentateurs 12 et 13 dans la troisième position (configuration C3). Ce changement de position dure un certain temps ΔC2 ; et
- une étape E6, à la fin de la phase de décollage pour laquelle les trains d'atterrissage sont complètement rentrés.

A titre d'illustration, sur un avion 2 sur lequel les positions des becs 12 et des volets 13 varient, de façon connue, progressivement d'une valeur O correspondant à une rentrée complète de ces derniers, jusqu'à des valeurs 23 et 32 correspondant à une sortie complète respectivement desdits becs 12 et volets 13 de manière à définir plusieurs configurations connues et dites "0", "1 +F", "2", "3" et "Full", telles que :

| Configuration | Position des becs 12 | Position des volets 13 |
|---|---|---|
| "0" non hypersustentée | 0 | 0 |
| "1 +F" faiblement hypersustentée | 10 | 8 |
| "2" moyennement hypersustentée | 20 | 14 |
| "3" très hypersustentée | 23 | 22 |
| "Full" complètement hypersustentée | 23 | 32 |

ladite première position (C1) peut par exemple correspondre à la configuration "3", ladite deuxième position (C2) à la configuration "2" et ladit troisième position (C3) à la configuration "1+F".

## Revendications

1. Système pour commander automatiquement des dispositifs hypersustentateurs (12, 13) d'un aéronef (2), lors d'une phase de décollage dudit aéronef (2), ledit système (1 A, 1 B) comportant :
- des moyens d'actionnement (15) commandables, pour déplacer lesdits dispositifs hypersustentateurs (12, 13) ; et
- une unité de commande (16A, 16B) susceptible d'engendrer des ordres de commande, pour commander lesdits moyens d'actionnement (15) de sorte que ces derniers amènent lesdits dispositifs hypersustentateurs (12, 13) dans une position déterminée, lesdits dispositifs hypersustentateurs (12, 13) étant amenés au début de la phase de décollage dans une première position, dans laquelle ils sont déployés,
où le système comporte, de plus, un premier moyen (17) pour détecter un décollage effectif de l'aéronef (2), correspondant au moment où les roues de l'aéronef (2) quittent le sol, et pour signaler le cas échéant une telle détection à l'unité de commande (16A, 16B), et où ladite unité de commande (16A, 16B) est formée de manière à engendrer automatiquement, au moins lorsque ledit premier moyen (17) signale le décollage effectif, un ordre de commande permettant d'amener lesdits dispositifs hypersustentateurs (12, 13) dans une deuxième position, dans laquelle ils sont rétractés par rapport à ladite première position.

2. Système selon la revendication 1,
**caractérisé en ce qu'**il est activable et **en ce que** l'activation dudit système (1A, 1B) est susceptible d'être réalisée par un opérateur de l'aéronef (2).

3. Système selon l'une des revendications 1 et 2,
**caractérisé en ce que** ledit premier moyen (17) détecte une indication de train d'atterrissage déjaugé.

4. Système selon l'une quelconque des revendications 1 à 3,
**caractérisé en ce qu'**il comporte, de plus, un premier dispositif de sécurité (20) qui comprend :
- des moyens (21) pour déterminer la vitesse effective de l'aéronef (2) ;
- des moyens (22) pour sélectionner une première vitesse minimale de consigne de l'aéronef (2), pour ladite deuxième position des dispositifs hypersustentateurs (12, 13) ; et
- des moyens (23, 26) pour comparer ladite vitesse effective à ladite première vitesse minimale de consigne,
et **en ce que** ledit premier dispositif de sécurité (20) est associé à ladite unité de commande (16A, 16B) de sorte que cette dernière engendre un ordre de commande permettant d'amener les dispositifs hypersustentateurs (12, 13) dans ladite deuxième position, uniquement lorsque ladite vitesse effective est supérieure à ladite première vitesse minimale de consigne.

5. Système selon l'une quelconque des revendications 1 à 4,
**caractérisé en ce que** ladite deuxième position est la position des dispositifs hypersustentateurs (12, 13) pour un vol de croisière de l'aéronef (2).

6. Système selon l'une quelconque des revendications 1 à 4,
**caractérisé en ce que** ladite deuxième position est une position intermédiaire entre ladite première position et une troisième position, dans laquelle les dispositifs hypersustentateurs (12, 13) sont davantage rétractés que dans ladite deuxième position.

7. Système selon la revendication 6,
**caractérisé en ce qu'**il comporte, de plus, un deuxième moyen (33) pour détecter le début de la rentrée d'au moins un train d'atterrissage (50, 51) de l'aéronef (2) et pour signaler le cas échéant une telle détection à l'unité de commande (16B), et **en ce que** ladite unité de commande (16B) est formée de manière à engendrer un ordre de commande permettant d'amener lesdits dispositifs hypersustentateurs (12, 13) de ladite deuxième position à ladite troisième position, au moins lorsque ledit deuxième moyen (33) signale le début de la rentrée du train d'atterrissage (50, 51).

8. Système selon l'une des revendications 6 et 7,
**caractérisé en ce qu'**il comporte, de plus, un second dispositif de sécurité (35) qui comprend :
- des moyens (36) pour déterminer la vitesse effective de l'aéronef (2) ;
- des moyens (37) pour sélectionner une seconde vitesse minimale de consigne de l'aéronef (2), pour ladite troisième position des dispositifs hypersustentateurs (12, 13) ; et
- des moyens (38, 41) pour comparer ladite vitesse effective à ladite seconde vitesse minimale de consigne,
et **en ce que** ledit second dispositif de sécurité (35) est associé à ladite unité de commande (16B) de sorte que cette dernière engendre un ordre de commande permettant d'amener les dispositifs hypersustentateurs (12, 13) dans ladite troisième position, uniquement lorsque ladite vitesse effective est supérieure à ladite seconde vitesse minimale de consigne.

9. Système selon l'une quelconque des revendications 6 à 8,
**caractérisé en ce qu'**il comporte, de plus, un troisième moyen (43) pour déterminer si un débit hydraulique suffisant pour amener les dispositifs hypersustentateurs (12, 13) de la deuxième position à la troisième position est disponible, et **en ce que** ladite unité de commande (16B) engendre un ordre de commande pour amener lesdits dispositifs hypersustentateurs (12, 13) de ladite deuxième position à ladite troisième position, uniquement lorsqu'un débit hydraulique suffisant est disponible.

10. Système selon l'une quelconque des revendications précédentes,
**caractérisé en ce qu'**il comporte, de plus, un moyen (44) pour vérifier si la deuxième position est la position la plus rétractée.

## Patentansprüche

1. System zur automatischen Steuerung der Hochauftriebsklappen (12, 13) eines Flugzeugs (2) beim Start des Flugzeugs (2), wobei das System (1A, 1B) Folgendes aufweist:
- steuerbare Betätigungsvorrichtungen (15), um die Hochauftriebsklappen (12, 13) zu verstellen; und
- eine Steuereinheit (16A, 16B), die Steuerbefehle erzeugen kann, um die Betätigungsvorrichtungen (15) anzusteuem, so dass diese die Hochauftriebsklappen (12, 13) in eine bestimmte Position bringen, wobei die Hochauftriebsklappen (12, 13) zu Beginn der Startphase in eine erste Position gebracht werden, in der sie ausgefahren sind,
wobei das System außerdem eine erste Vorrichtung (17) aufweist, um das tatsächliche Abheben des Flugzeugs (2) zu ermitteln, das dem Moment entspricht, in dem die Räder des Flugzeugs (2) den Boden verlassen und gegebenenfalls eine Meldung darüber an die Steuereinheit (16A, 16B) zu senden, und wobei die Steuereinheit (16A, 16B) so ausgestaltet ist, dass sie automatisch, zumindest wenn die erste Vorrichtung (17) das tatsächliche Abheben signalisiert, einen Steuerbefehl erzeugt, der es erlaubt, die Hochauftriebsklappen (12, 13) in eine zweite Position zu bringen, in der sie im Vergleich zur ersten Position eingefahren sind.

2. System gemäß Anspruch 1,
**dadurch gekennzeichnet, dass** es aktivierbar ist und dass die Aktivierung des Systems (1A, 1B) durch einen Operator des Flugzeugs (2) erfolgen kann.

3. System gemäß einem der Ansprüche 1 und 2,
**dadurch gekennzeichnet, dass** die erste Vorrichtung (17) die Mitteilung erfasst, dass das Fahrwerk entlastet ist.

4. System gemäß einem der Ansprüche 1 bis 3,
**dadurch gekennzeichnet, dass** es außerdem eine erste Sicherheitsvorrichtung (20) aufweist, die Folgendes umfasst:
- Vorrichtungen (21), um die effektive Geschwindigkeit des Flugzeugs (2) zu ermitteln;
- Vorrichtungen (22), um eine erste Soll-Mindestgeschwindigkeit des Flugzeugs (2) für die zweite Position der Hochauftriebsklappen (12, 13) zu wählen; und
- Vorrichtungen (23, 26), um die effektive Geschwindigkeit mit der ersten Soll-Mindestgeschwindigkeit abzugleichen,
und dass die erste Sicherheitsvorrichtung (20) mit der Steuereinheit (16A, 16B) verbunden ist, so dass diese einen Steuerbefehl erzeugt, der es erlaubt, die Hochauftriebsklappen (12, 13) nur dann in die zweite Position zu bringen, wenn die effektive Geschwindigkeit die erste Soll-Mindestgeschwindigkeit überschreitet.

5. System gemäß einem der Ansprüche 1 bis 4,
**dadurch gekennzeichnet, dass** die zweite Position die Position der Hochauftriebsklappen (12, 13) für einen Reiseflug des Flugzeugs (2) ist.

6. System gemäß einem der Ansprüche 1 bis 4,
**dadurch gekennzeichnet, dass** die zweite Position eine Zwischenstellung zwischen der ersten Position und einer dritten Position ist, in der die Hochauftriebsklappen (12; 13) noch weiter eingefahren sind als in der zweiten Position.

7. System gemäß Anspruch 6,
**dadurch gekennzeichnet, dass** es außerdem eine zweite Vorrichtung (33) aufweist, um den Beginn des Einfahrens von mindestens einem Fahrwerk (50, 51) des Flugzeugs (2) zu ermitteln und gegebenenfalls eine Meldung darüber an die Steuereinheit (16B) zu senden, und dass die Steuereinheit (16B) so ausgestaltet ist, dass sie einen Steuerbefehl erzeugt, der es erlaubt, die Hochauftriebsklappen (12, 13) von der zweiten Position in die dritte Position zu bringen, zumindest wenn die zweite Vorrichtung (33) den Beginn des Einfahrens des Fahrwerks (50, 51) signalisiert.

8. System gemäß einem der Ansprüche 6 und 7,
**dadurch gekennzeichnet, dass** es außerdem eine zweite Sicherheitsvorrichtung (35) aufweist, die Folgendes umfasst:
- Vorrichtungen (36), um die effektive Geschwindigkeit des Flugzeugs (2) zu ermitteln;
- Vorrichtungen (37), um eine zweite Soll-Mindestgeschwindigkeit des Flugzeugs (2) für die dritte Position der Hochauftriebsklappen (12, 13) zu wählen; und
- Vorrichtungen (38, 41), um die effektive Geschwindigkeit mit der zweiten Soll-Mindestgeschwindigkeit abzugleichen,
und dass die zweite Sicherheitsvorrichtung (35) mit der Steuereinheit (16B) verbunden ist, so dass diese einen Steuerbefehl erzeugt, der es erlaubt, die Hochauftriebsklappen (12, 13) nur dann in die dritte Position zu bringen, wenn die effektive Geschwindigkeit die zweite Soll-Mindestgeschwindigkeit überschreitet.

9. System gemäß einem der Ansprüche 6 bis 8,
**dadurch gekennzeichnet, dass** es außerdem eine dritte Vorrichtung (43) aufweist, um festzustellen, ob ein ausreichender Hydraulikstrom verfügbar ist, um die Hochauftriebsklappen (12, 13) von der zweiten Position in die dritte Position zu bringen, und dass die Steuereinheit (16B) nur dann einen Steuerbefehl erzeugt, um die Hochauftriebsklappen (12, 13) von der zweiten Position in die dritte Position zu bringen, wenn ein ausreichender Hydraulikstrom verfügbar ist.

10. System gemäß einem der vorstehend genannten Ansprüche,
**dadurch gekennzeichnet, dass** es außerdem eine Vorrichtung (44) aufweist, um zu überprüfen, ob die zweite Position die am weitesten eingefahrene Position ist.

## Claims

1. System for automatically controlling lift-augmentation devices (12, 13) of an aircraft (2), during a phase of take-off by said aircraft (2), said system (1A, 1B) including:
- controllable actuating means (15) for shifting said lift-augmentation devices (12, 13); and
- a control unit (16A, 16B) suitable for generating control demands, in order to control said actuating means (15) in such a way that the latter bring said lift-augmentation devices (12, 13) into a defined position, said lift-augmentation devices (12, 13) being brought at the start of the take-off phase into a first position, in which they are deployed,
where the system further includes a first means (17) for detecting an actual take-off by the aircraft (2) corresponding to the moment when the wheels of the aircraft leave the ground, and, if appropriate, for signalling such detection to the control unit (16A, 16B), and where said control unit (16A, 16B) is formed in such a way as, at least when said first means (17) signals the actual take-off, to generate automatically a control demand making it possible to bring said lift-augmentation devices (12, 13) into a second position, in which they are retracted by comparison with said first position.

2. System according to Claim 1, **characterized in that** it can be activated and **in that** the activation of said system (1A, 1B) is capable of being carried out by an operator of the aircraft (2).

3. System according to either of Claims 1 and 2, **characterized in that** said first means (17) detects a landing-gear-unloaded indication.

4. System according to any one of claims 1 to 3, **characterized in that** it further includes a first safety device (20) which comprises:
- means (21) for determining the actual speed of the aircraft (2);
- means (22) for selecting a first minimum datum speed of the aircraft (2), for said second position of the lift-augmentation devices (12, 13); and
- means (23, 26) for comparing said actual speed with said first minimum datum speed, and **in that** said first safety device (20) is associated with said control unit (16A, 16B) in such a way that the latter generates a control demand making it possible to bring the lift-augmentation devices (12, 13) into said second position only when said actual speed is greater than said first minimum datum speed.

5. System according to any one of Claims 1 to 4, **characterized in that** said second position is the position of the lift-augmentation devices (12, 13) for cruising flight of the aircraft (2).

6. System according to any one of Claims 1 to 4, **characterized in that** said second position is an intermediate position between said first position and a third position, in which the lift-augmentation devices (12, 13) are further retracted than in said second position.

7. System according to Claim 6, **characterized in that** it further includes a second means (33) for detecting the start of the raising of at least one landing gear (50, 51) of the aircraft (2) and, if appropriate, for signalling such a detection to the control unit (16B), and **in that** said control unit (16B) is formed in such a way as to generate a control demand making it possible to bring said lift-augmentation devices (12, 13) from said second position to said third position, at least when said second means (33) signals the start of the raising of the landing gear (50, 51).

8. System according to either of Claims 6 and 7, **characterized in that** it further includes a second safety device (35) which comprises:
- means (36) for determining the actual speed of the aircraft (2);
- means (37) for selecting a second minimum datum speed of the aircraft (2), for said third position of the lift-augmentation devices (12, 13); and
- means (38, 41) for comparing said actual speed with said second minimum datum speed,
and **in that** said second safety device (35) is associated with said control unit (16B) in such a way that the latter generates a control demand making it possible to bring the lift-augmentation devices (12, 13) into said third position only when said actual speed is greater than said second minimum datum speed.

9. System according to any one of Claims 6 to 8, **characterized in that** it further includes a third means (43) for determining whether a hydraulic flow rate which is sufficient to bring the lift-augmentation devices (12, 13) from the second position to the third position is available, and **in that** said control unit (16B) generates a control demand in order to bring said lift-augmentation devices (12, 13) from said second position to said third position only when a sufficient hydraulic flow rate is available.

10. System according to any one of the preceding claims, which further includes a means (44) for verifying whether the second position is the most retracted position.
